Europäisches Patentamt

(19) European Patent Office

Office européen des brevets

(11) EP 0 725 724 B1

## (12) EUROPEAN PATENT SPECIFICATION

(45) Date of publication and mention
of the grant of the patent:
**28.07.1999 Bulletin 1999/30**

(21) Application number: **93906743.5**

(22) Date of filing: **24.03.1993**

(51) Int. Cl.$^6$: **B29C 44/00**, C08J 9/14

(86) International application number:
**PCT/GB93/00606**

(87) International publication number:
**WO 93/18909 (30.09.1993 Gazette 1993/24)**

(54) **METHOD OF PRODUCING FOAMED PHENOL-FORMALDEHYDE PANELS**

VERFAHREN ZUR HERSTELLUNG VON SCHAUMPLATTEN AUS PHENOL-FORMALDEHYDE

PROCEDE DE PRODUCTION DE PANNEAUX EN PHENOL-FORMALDEHYDE EXPANSE

(84) Designated Contracting States:
AT BE CH DE DK ES FR GB GR IE IT LI LU MC NL
PT SE

(30) Priority: 26.03.1992 GB 9206573
19.10.1992 EP 92309531

(43) Date of publication of application:
**14.08.1996 Bulletin 1996/33**

(73) Proprietor:
**ISOFLAM INTERNATIONAL LIMITED
Southfields, London SW18 5ND (GB)**

(72) Inventors:
• **FARKAS, Robert
Bishops Stortford, Hetfordshire CM23 3PD (GB)**
• **WINNINGTON-INGRAM, Edward Nicholas
Chichester, West Sussex PO19 2LX (GB)**

(74) Representative:
**Austin, Hedley William et al
Urquhart-Dykes & Lord
Alexandra House
1 Alexandra Road
Swansea Wales SA1 5ED (GB)**

(56) References cited:
EP-A- 0 276 430         BE-A- 840 923
DE-A- 2 327 314         FR-A- 2 124 185
GB-A- 2 085 886         US-A- 4 539 338

• WORLD PATENTS INDEX LATEST Derwent
Publications Ltd, London, GB AN 86-012362
[02]; DW 8602 & SU-A-1162829 (TEPLOPROEKT)
23 June 1985

**Description**

This invention relates to the production of foamed moulded articles, and especially to the production of such articles from compositions based on phenolic resins. The invention is especially concerned with the moulding of articles having relatively thin cross-sections, in other words articles having length and width dimensions substantially greater than their thicknesses.

Such articles include insulating slabs, boards and panels, composite boards and panels, wall panels and partitions, cladding boards and panels, pipe and column claddings, doors and the like.

Phenolic foams, i.e. phenol-formaldehyde resole-based foams, have been established in regular commercial production for over thirty years, but the scale of such production has been very much smaller than other polymer-based foams such as styrene and polyurethane insulation and structural foams. At present such articles are made from phenolic foams by three main methods, as follows:-

1. In large blocks at low or no pressure which are then sliced into slabs or cut into shapes. The mould surface temperatures at the beginning of the process are normally between 25° and 50°C, and do not play a major part in the heat required for the foaming and curing process. The heat produced by the exothermic process is the main factor in the foaming and curing process. Most of the foaming takes place below 75°C under little or no significant pressure. The large foam blocks are removed from the mould and in some cases post-cured for a considerable time i.e. 4-16 hours or even longer at temperatures approximately up to 85°C. The large blocks are then cut and shaped to the required dimensions. The foam is sometimes cut and shaped after moulding and post-cured subsequently. The foam compound is normally fed into the moulds at temperatures between 20° and 30°C. In some foam block processes the foam temperature reaches nearly 100°C, but the moulds are either well vented or partially or completely open. This is achieved only under strongly acid conditions, i.e. at pH 1 or less.

2. Some phenolic foam is produced in slab form in horizontal discontinuous moulds, the temperature of which is normally between room temperature and 50°c maximum. The foaming action is almost entirely caused by the exothermic reaction. These slabs need extended post-cure treatment either of long periods at or near room temperature or at elevated temperatures in an oven. The system does not lend itself to most types of composite mouldings or many reinforcements or in situ inserts. There is usually a great deal of waste because the air must be pushed out by the foam from the horizontal moulds through venting slots under or on the lid. The moulds may be slightly inclined to allow easier escape of air but the waste necessary to push the air out of the mould is still significant.

3. Continuous foaming between horizontally-disposed flexible materials such as fibre glass, paper or thin steel has been introduced more recently. Foaming is carried out in a heated tunnel at normal pressures. Foaming takes place in or near the entrance of the tunnel at relatively low temperatures and is caused largely by exotherm. The temperature is normally increased deeper into the tunnel to effect more advanced curing conditions.

These known processes have limitations, in that for example they do not produce finished products in the sense that no further shaping or fabrication is necessary once they are removed from the mould. Furthermore, it is not possible in the known processes to produce articles with moulded-in inserts, e.g. reinforcements, or surface layers.

A further method of forming a moulded article is disclosed in BE-A-840923 to GMT. GMT teaches a moulded article formed by mixing a phenolic resin and a filler of mineral powder and mineral, vegetable or synthetic fibres, and then adding an acidic or basic catalyst and a low boiling point foaming agent. The mixture is then fed into a differentially heated mould to produce closed cells decreasing from the heated upper region to a cooler lower region thereby forming a high density skin on the lower region of the moulded article.

When the resin is acid catalysed, the method just described produces a moulded article of disadvantageously high acidity.

It therefore is an object of the present invention to provide a method for the production of moulded articles from foamable phenolic resin compositions, in which the limitations of the known methods described above are at least alleviated.

There is therefore provided a method for the production of a moulded article having a width dimension greater than its thickness, comprising:

(a) charging into a mould having a heated surface at a temperature in the range 60 to 90° C a foamable composition containing a phenol-formaldehyde resin, an acid catalyst and a filler which includes a neutralising filler, the mould having a mould cavity which has a depth substantially equal to the width of the resulting moulded article and a width substantially equal to the thickness of the resulting moulded article;

(b) causing the composition to expand to fill the mould and permitting the resin to cure in the mould such that the temperature of the composition during curing is at least 90°C; and

(c) removing the moulded article formed in step (b) from the mould,
the neutralising filler being such that the pH of the final cured foam is not less than 2.

The phenolic resin used as the basis of the foamable composition may be of conventional type, for example an aqueous alkaline-condensed resole, with a phenol:formaldehyde ratio of 1:1.2 to 2.0, and a solids content of between 65% and 85% by weight. Particularly useful resins are those having a phenol:formaldehyde ratio in the range 1:1.5 to 1.7. The resole should be in the A stage, i.e. liquid at 25°C, and preferably it has a viscosity below 120 poises at 25°C, most suitably below 12 poises at 40°C. The resin may be modified with plasticisers such as glycols, polyglycols, glycol ethers or glycol esters, to give greater resilience and better flow properties in the mould.

As acid catalysts may be used a wide range of sulphonic acids, for example paratoluene sulphonic acid, xylene sulphonic acid and phenol sulphonic acid, typically in an amount of 5-15% by weight, based on the weight of the foamable Composition. Most commercial sulphonic acids contain small quantities of sulphuric acid, which will accelerate the reaction. Further small additions, e.g. up to 5% by weight, of sulphuric acid may be added to the catalysts. A particularly useful catalyst is a mixture of phenol sulphonic acid and methyl sulphonic acid.

By "filler having a neutralising effect" we mean a filler which is capable of controlling the acidity of the foaming process. As the foaming process proceeds, the reaction is strongly acidic, and in order that the resultant foam should not also be strongly acidic, but rather should have a pH of at least 2, and preferably from 2 to 4, a filler is used which is capable of neutralising at least some of the free acid in the reaction and raising the pH of the reaction. A particularly suitable filler having a neutralising effect is aluminium hydroxide (or hydrated alumina), which also has the effect of enhancing the fire-resistance and reducing the smoke emission characteristics of the resulting products. Commercial aluminium hydroxide has the tendency to buffer the foam at a pH between 2 and 4. The comparatively high cure temperatures employed in the foaming stage of the method of the invention will enable a full cure to be achieved in this pH range. Another suitable neutralising filler is talc.

The foamable composition may also contain one or more other ingredients, such as a surfactant, non-neutralising filler, blowing agent and hardener.

The surfactants are used optionally to control cell size and the proportion of closed and open cells in the foamed article. Some surfactants may be used as flow-and wetting-control agents for the foaming composition. Examples include surfactants of the silicone-based type, e.g. Dow 193, and Tween 80. The surfactants, when present, will suitably amount to 0.2 to 3.0% by weight, based on the resole.

Non-neutralising fillers may also be used, in addition to the neutralising fillers, to improve the fire-resistance and dimensional stability of the products, to reduce the cost thereof, and to provide small proportions of carbonate as nucleating agents, forming carbon dioxide with any acid catalyst. Typically useful fillers include for example gypsum plaster, calcium sulphate dihydrate, glass microspheres and fly ash. The filler, whether neutralising or non-neutralising, may be present in an amount of 30-150%, by weight, on the resole.

A wide range of blowing agents may be used, for example pentane. Methylene chloride is a particularly useful blowing agent. It is low in cost, low in its environmental damaging effects, and comparatively low in toxicity as well as having low inflammability. Both gaseous and liquid blowing agents may be used. The amount of blowing agent used will depend on the desired density of the foam. For example, a liquid blowing agent may typically be used in an amount of 4 to 20%, by weight, on the resole; a gaseous blowing agent may typically be used in an amount of up to 30% by volume, on the foamable composition.

The moulds will normally be made of metal to provide good heat transfer. Moulds are best fitted with a heating jacket suitable for heating and cooling with liquids or gases. Electrical heating may be used but has the disadvantage of prolonging cooling when this is necessary.

The moulds may be equipped with injection orifices or fast closing lids or sides.

The venting of the moulds is of particular importance and requires careful design. Venting may take place through slots or holes, the size of which is of particular importance. The dimensions of the vents are related to the viscosity or flow properties of the foaming compound in order to permit air and gases to escape but to retain the foaming composition. For the preferred compositions the vents should be preferably a maximum of 3mm width or 12mm diameter and more commonly 2mm maximum width or 8mm diameter. They are suitably placed in the uppermost possible positions in the mould. A particularly useful method of venting is through fibre mats or fabrics, suitably placed over the tops of the moulds, which retain the foam but permit the air and gases to escape.

It is preferred that the moulds are essentially vertical in order to allow gas and trapped air to escape from a minimum surface area. The heated moulds and the generally high temperatures employed in the foaming process will enable free flowing vertically rising foaming compounds giving uniform densities even when rising to a considerable height e.g. over 1 metre through a narrow cross-section.

The pressure build up during the final stages may even out the densities even further. For best results the width of the mould cavity (equivalent to the thickness of the moulding) should not exceed 250mm, preferably not exceed 200mm.

The foamable composition is suitably injected at temperatures higher than 20°C, e.g. between 25° and 45°C, in order to provide free flowing conditions and a higher initial foaming temperature. The moulds are made up of a number of sections which open and close, which facilitates demoulding as well as the placement of surfacing materials, reinforcements and structural components which are integrally moulded into the foam. For example in the case of wall panels, surfacing materials may be fixed to the side of the mould, then reinforcement clamped into it by closing the mould and, where desirable, a further component such as a wire mesh or grid may be placed into the mould by clamping or other means. A typical panel mould may be dismantled into 3 to 6 components as required. A particularly useful reinforced foam may be produced by clamping fibre mats or fabrics onto the sides of the mould and when the foam rises it will impregnate the fibres and spread them inwards to a given depth depending on the type of fabric and the method of clamping.

The metal moulds may be protected from the foam by PTFE, polypropylene, polyvinylidene fluoride or other non adhering plastics placed over the mould surfaces.

Typical mould temperatures are 60° to 85°C with a normal maximum of 97°C. The foam will reach considerably higher temperatures due to the exothermic reaction. If the initial mould temperature is as low as 50°C, then it should be rapidly raised, e.g. to 65°C in say 3 minutes, at the start of the moulding cycle.

It is preferable to make a premix consisting of resin, optionally plasticisers, surfactants and fillers. This premix is compounded with blowing agents and catalysts or hardeners immediately prior to charging into the mould. It is important to control the charging temperature very accurately in order to obtain the desired foam. For the proposed process the charging temperature is normally between 30° and 45°C. This reduces the viscosity of the compound to the required level (e.g. to less than 38 poises at 40°C, Brookfield Spindle No.4) and activates the reaction in order to achieve a fast cure time. The foaming compound is charged into the bottom of the heated mould which triggers the reaction further and causes the foam formation. A typical mould temperature is 75°C. Mould temperatures are normally between 60° and 85°C. The exothermic reaction will raise the foam temperature to between 90° and 110°C. Gases and air escape through vents at the top of the mould but the foam compound is either completely retained in the mould or with very little waste escaping. The pressure created is between 0.15 and 1.5 bar and is controlled by temperature, charging quantity and composition of the foaming compound to give the correct flow and penetrative properties, to impregnate any reinforcements and envelop any inserts and wet the surfaces of the components of composites. The pressure is also used to even out the density throughout the mould. Sometimes a greater density is required near the top of the mould to provide a base for a jointing system and this can be achieved by increasing the pressure further as well as the temperature. The foamed component is usually removed from the mould and post cured in an oven in order to complete the cure fully, when necessary, and also for the removal of by-products and gases.

The accompanying drawings illustrate a mould which may be used in the method of the invention. In the drawings, which are diagrammatic in nature:-

Figure 1 is a perspective view of the mould assembly; and
Figure 2 is a perspective view of the mould frame which in use forms part of the mould assembly of Figure 1.

Referring to the drawings, the mould assembly comprises outer mould plates 1,2, suitably of metal, such as steel, and a mould frame 3 which may also be of metal or other rigid material and which in use is disposed between mould plates 1 and 2 and is held tightly therebetween by a series of clamp straps 4. The mould plates 1 and 2 are heated/cooled by means of tubes 5 set one within each plate. Hot water may be fed into each tube 5 and 6 and will exit at 7. Heating of the mould plates may alternatively be by means of electric heaters contained in the plates.

The mould frame 3 is made up of four beams 8,9,10,11, which may be individually formed, and then joined together to form the frame, or which may be formed integrally with each other, e.g. by moulding or casting. The beam 11, which is disposed uppermost when the mould is assembled for use, is shaped to provide alternate lands 12 and recesses 13, and has an aperture 14 through its thickness.

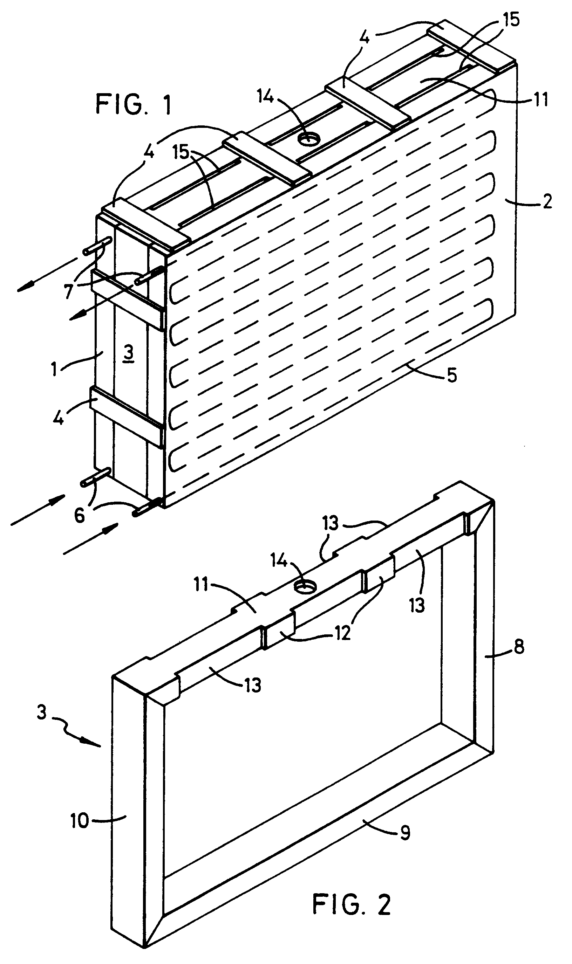

When the mould plates 1 and 2 and the mould frame 3 are assembled as shown in Figure 1, the recesses 13 form, with the adjacent mould plates 1 and 2, vents 15 for the escape of air and gases from within the mould during the foaming operation. Although not shown in the drawings, the vents 15 could be covered on their undersides with a gas-permeable liner of, for example, glass fibre mat or other permeable fabric.

When the mould is assembled as shown in Figure 1, the plates 1 and 2 are heated to raise the temperature at the internal surface of the mould to a temperature within the range 60° to 90°C. Foamable material, suitably at a temperature between 30° and 45°C, is then injected into the mould through aperture 14, and foams and rises to fill the mould. Upon completion of foaming, the clamp straps 4 are removed and the mould assembly disassembled. The foamed product, then held in the frame 3, can be carried in the frame for further processing and/or storage, or can be removed therefrom.

The following Examples illustrate the invention.

EXAMPLE 1

A premix is prepared from the following:-

| Phenol formaldehyde resin (P:F ratio 1:1.55) | 45 parts weight |
|---|---|
| dipropylene glycol | 4.5 parts weight |
| surfactant, Tween 80 | 0.5 parts weight |
| gypsum plaster | 20.0 parts weight |
| aluminium hydroxide | 30.0 parts weight |
| Total | 100 parts weight. |

The premix is then compounded as follows:-

Foaming Compound

| Premix | 100 parts weight |
|---|---|
| Methylene chloride | 6 parts weight |
| 65% sol p-toluene sulphonic acid | 9 parts weight |

The foaming compound is mixed under high shear and injected into the heated mould at 25°C.

The mould temperature is 65°C.

The mould consists of a PTFE lined rectangular box which can be dismantled into three components. The dimensions are horizontally 2.4m long, 150mm wide and 1.2m high, internal dimensions, in order to manufacture an insulating building board. Typically continuous filament glass mat is clamped on the inside of the mould to reinforce the foam to a given depth. The penetration into the foam is governed by the tension, the nature of the fibres and fibre bundles as well as the proportion and nature of the binder used in the mat. Typical fibre penetration is approximately 5 to 25mm into the foam. A wire mesh is placed into the centre of the mould which provides a security barrier. The foam will penetrate both the fibre mat and the wire mesh. Typically the charge is calculated to give a foam density of approximately 100 kg per cubic metre. The foam will fill the mould within 2 to 4 minutes from charging and create a pressure of approximately 0.4 bar, and a temperature of 105°C. The dwell time in the mould is typically 12 minutes, after which the foamed article is cooled to 90°C and then post-cured. Post curing takes approximately 40 minutes to one hour at 125°C in order to remove by-products and other volatiles.

Venting takes place in part through the clamped glass fibre at the joint in the top of the mould and through vent holes covered with glass fibre mat, at the top of the mould. The pH of the cured foam is 2.4.

EXAMPLE 2

Premix

| Phenol formaldehyde resin (P:F ratio 1:1.65) | 46.3 parts weight |
|---|---|
| propylene glycol | 4.0 parts weight |

(continued)

| | |
|---|---|
| surfactant, Dow 193 | 0.7 parts weight |
| aluminium hydroxide | 49.0 parts weight |

Foaming Compound

| Premix | 100 parts weight |
|---|---|
| methylene chloride | 5 parts weight |
| air | 30 parts volume |
| 65% sol phenol sulphonic acid | 10 parts weight |

The compounds are mixed as before and injected into a mould at 35°C. The mould is similar in design to the one in Example 1, but has 0.5mm thick steel panels fastened to the sides on the inside of the mould with magnets. The steel is primed with an epoxy primer for adhesion to the foam and 200 grams per square metre glass fibre is loosely bonded to the steel with a phenolic adhesive. Mould temperature is 80°C. The foam charge is calculated to give a density of 130 kg per cubic metre. The foam will fill the mould within 3 minutes creating a pressure of approximately 0.5 bar. The dwell time is 15 minutes. The foam will reach a temperature of 95°C before being discharged to be post cured for 30 minutes at 85°C. The foam will have penetrated the glass fibre and fully impregnated it and will create a strong bond with the steel. Venting is at the top of the mould. It is preferred to cover the vent holes with glass fibre which will be impregnated and will also retain the foam. The venting slots are 2 to 3mm. wide and covered with glass fibres adhered to the inside top of the mould with a phenolic adhesive. The pH of the cured foam is 2.8.

In a particularly advantageous embodiment of the invention the foamed moulded product is foamed with the mould frame (reference "3" in the drawings), or at least part of it, as an integral part. Thus, for example, the mould frame 3, or at least some of its component beams 8-11, could be formed of a relatively high density phenolic foam of similar composition to the body of the moulding, optionally reinforced with glass fibre or other reinforcing material. The mould frame, or the individual beams from which it is made, could be formed in horizontal trough moulds of depth for example 40 to 100mms. They could have a density in the range 200 to 350 kg/m$^3$, and would add strength to the final moulding, together with enhanced insulating characteristics. In this embodiment, when the frame 3 becomes an integral part of the foamed moulding, the beam 11 would not be formed with recesses 13, but a series of small vent holes could be provided, e.g. in alignment with aperture 14.

With the above-described embodiment it is possible to mould into the pre-moulded mould frame components such as joints, e.g., tongue and groove joints, hinges and locks (for example when a door is being produced).

The present invention has substantial advantages over previously-used methods for making products of the type made by the invention. Thus, the prior art methods have generally used very strongly acid-catalysed foaming compounds in order to achieve a full cure, e.g. at pH 1 or less. None of such processes has used the interaction of the parameters of variable mould temperature control, variable pressure, variable feed and foaming temperature and variable feed composition to produce a wide range of foam or foam-composite mouldings with a wide range of reinforcements, inserts and surfacing materials. The method of the invention is carried out at high temperatures and preferably above-atmospheric pressure.

In the prior processes cold or relatively cold moulds were used. Thus, as the foamable material rose within the moulds it tended to cool and its viscosity rose, with the result that the density throughout the foamed article was non-uniform, and additionally flaws were produced in the foam. In contrast, the high mould temperatures used in the present invention reduce the viscosity of the foaming compound, particularly in the upper portions of the mould, and maintain flow. Furthermore, the impetus of the exothermic reaction is maintained, thus speeding up the foaming process. Further, due to the high temperature at which foaming takes place, and the preferred presence of aluminium hydroxide as a filler, the foaming takes place at a substantially lower acid content (e.g. pH 2 to 4) than in the prior processes. This means that reinforcement materials, e.g. steel and other metal surfacing materials and inserts, and many glass fibres, which would otherwise be attacked by a strongly-acidic environment, can be used in the present invention.

Amongst the advantages which flow from the use of a mould which is disposed such that its depth is substantially equal to the width of the resulting moulded article, and its width is substantially equal to the thickness of the resulting moulded article, are the following:-

(a) Entrapped air and gases are a very common problem in most known foam moulding processes. This is particularly so in the production of panels or essentially flat mouldings in horizontal moulds. In contrast, the use of "vertical" moulds in accordance with the invention enables the much more effective escape of entrapped air or gases from the top of the mould.

(b) In the process of the invention, a deep pool of foaming compound at the bottom of a narrow "vertical" mould forms a concentrated source of exothermic heat energy for foaming, and this is more easily controlled than a thin layer of foaming compound spread over the bottom of a horizontal mould, as in known processes. The heat losses or gains over the relatively large surface areas of conventional moulds are more difficult to control than in the present invention.

(c) Since surfacing materials, inserts or reinforcements for the foamed articles of the invention may be suspended or stood vertically in the moulds, they are much easier to locate than in the horizontal moulds of the known processes.

(d) The removal and transport of flat mouldings of relatively thin cross-section from the horizontal moulds of the known processes can lead to breakages. Removal and transport of finished articles from the "vertical" moulds of the present invention is much less likely to lead to damaged products. Furthermore, the mouldings can be transferred in the mould frame to any subsequent operation, e.g. post-curing, finishing or storing.

Thus, the foaming process of the present invention gives high temperature rapid cure, at low acid content. The density distribution of the foamed product can be very closely controlled, from uniform to a differential distribution if appropriate. The process of the invention enables the moulding in of fibrous, mesh or perforated reinforcements and structural members, which may be impregnated by the foam material. The foam has good wetting properties vis-a-vis surfacing materials.

The invention enables moulding with virtually no waste, by controlled mould venting and complete control of the foaming reaction. The invention permits the wasteless moulding of phenol:formaldehyde foaming compositions in "vertical" moulds of relatively narrow cross-section with a variety of internal reinforcements and structural members as well as a wide range of surfacing materials. Such a versatile range of possibilities cannot be achieved with the known processes. In contrast to the known processes the process of the invention enables cure of the foaming resin with a much lower acid catalyst content, as the foaming process is completed at a much higher temperature than hitherto, which temperature can be maintained from the beginning of the foaming reaction to the end of any post-cure treatment which may be required.

## Claims

1.  A method for the production of a moulded article having a width dimension greater than its thickness, comprising:

    (a) charging into a mould having a heated surface (1, 2) a foamable composition containing a phenol-formaldehyde resin, an acid catalyst and a filler, the mould having a mould cavity which has a depth substantially equal to the width of the resulting moulded article and a width substantially equal to the thickness of the resulting moulded article;
    (b) causing the composition to expand to fill the mould and permitting the resin to cure in the mould such that the temperature of the composition during curing is at least 90°C; and
    (c) removing the moulded article formed in step (b) from the mould;
    characterised in that the filler includes a neutralising filler such that the pH of the final cured foam is not less than 2, and the temperature of the mould surface (1, 2) at the commencement of step (a) is in the range 60°C to 90°C.

2.  A method according to claim 1, wherein the phenol-formaldehyde resin is an aqueous alkaline-condensed resole having a phenol:formaldehyde ratio of 1:1.2 to 1:2.0 and solids content between 65% and 85% by weight.

3.  A method according to claim 2, wherein the phenol:formaldehyde ratio of the resole is in the range 1:1.5 to 1:1.7.

4.  A method according to claim 2 or 3, wherein the resole is in the A stage has a viscosity below 120 poises at 25°C.

5.  A method according to claim 3 or 4, wherein the resole has a viscosity below 12 poises at 40°C.

6.  A method according to any of claims 1 to 5, wherein the phenol-formaldehyde resin is modified with a glycol, polyglycol, glycol ether or glycol ester.

7. A method according to any of claims 1 to 6, wherein the catalyst is a sulphonic acid.

8. A method according to claim 7, wherein the catalyst is paratoluene sulphonic acid, xylene sulphonic acid or phenol sulphonic acid, optionally admixed with sulphuric acid.

9. A method according to claims 7 or 8, wherein the sulphonic acid is present in an amount of 5-15% by weight, based on the weight of the foamable composition.

10. A method according to any of claims 7 to 9, wherein the catalyst is a mixture of phenol sulphonic acid and methyl sulphonic acid.

11. A method according to any of claims 1 to 10, wherein the neutralising filler is aluminium hydroxide.

12. A method according to any of claim 1 to 6, wherein the foamable composition additionally contains one or more of a surfactant, blowing agent and hardener.

13. A method according to claim 12, wherein the filler contains gypsum plaster, calcium sulphate dihydrate, glass microspheres and/or fly ash.

14. A method according to claim 13, wherein the blowing agent is pentane or methylene chloride.

15. A method according to any of claims 1 to 14, wherein the resin contains 30-150%, based on the weight of the resin, of the filler.

16. A method according to any of claims 1 to 15, wherein the foamable composition is charged at a temperature between 25 and 45°C into the mould.

17. A method according to any of claims 1 to 16, wherein the temperature of the mould surface (1, 2) at the commencement of charging of the foamable composition is in the range 60 to 85°C.

18. A method according to any of claims 1 to 17, wherein the temperature of the mould surface (1, 2) during the cure of the resin does not exceed 97°C.

**Patentansprüche**

1. Verfahren zur Herstellung eines geformten (gegossenen) Gegenstands mit einer Breitenabmessung größer als dessen Dicke, umfassend:

   (a) Einfüllen einer aufschäumbaren Zusammensetzung, die ein Phenol-Formaldehyd-Harz, einen Säurekatalysator und ein Füllmaterial enthält, in eine Form mit einer beheizten Oberfläche (1, 2), wobei die Form einen Formhohlraum besitzt, dessen Tiefe im wesentlichen gleich ist mit der Breite des entstehenden geformten Gegenstands und dessen Breite im wesentlichen gleich ist mit der Dicke des resultierenden geformten Gegenstands;
   (b) Verursachen einer Expansion der Zusammensetzung, um die Form auszufüllen, und Aushärtenlassen des Harzes in der Form, derart, daß die Temperatur der Zusammensetzung während des Aushärtens mindestens 90°C beträgt; und
   (c) Entfernen des in Schritt (b) geformten Artikels aus der Gußform;
   dadurch gekennzeichnet, daß das Füllmaterial ein neutralisierendes Füllmaterial umfaßt, so daß der pH des fertigen, ausgehärteten Schaumes nicht niedriger als 2 ist und die Temperatur der Formoberfläche (1, 2) zu Beginn des Schrittes (a) zwischen 60°C und 90°C beträgt.

2. Verfahren nach Anspruch 1, wobei das Phenol-Formaldehyd-Harz ein wässriges, alkalisch kondensiertes Resol ist, mit einem Phenol:Formaldehyd-Verhältnis von 1:1,2 bis 1:2,0 und mit einem Feststoff-Gehalt zwischen 65 Gew.-% und 85 Gew.-%.

3. Verfahren nach Anspruch 2, wobei das Phenol-Formaldehyd-Verhältnis des Resols im Bereich zwischen 1:1,5 und 1:1,7 liegt.

**4.** Verfahren nach Anspruch 2 oder 3, wobei das Resol im A-Zustand eine Viskosität unter 120 Poise bei 25°C besitzt.

**5.** Verfahren nach Anspruch 3 oder 4, wobei das Resol eine Viskosität unter 12 Poise bei 40° aufweist.

**6.** Verfahren nach einem der Ansprüche 1 bis 5, wobei das Phenol-Formaldehyd-Harz mit einem Glycol, Polyglycol, Glycolether oder Glycolester modifiziert ist.

**7.** Verfahren nach einem der Ansprüche 1 bis 6, wobei der Katalysator eine Sulfonsäure ist.

**8.** Verfahren nach Anspruch 7, wobei der Katalysator Paratololsulfonsäure, Xylolsulfonsäure oder Phenolsulfonsäure ist und wahlweise mit Schwefelsäure versetzt ist.

**9.** Verfahren nach Anspruch 7 oder 8, wobei die Sulfonsäure in einem Anteil von 5 Gew.-% bis 15 Gew.-%, bezogen auf das Gewicht der aufschäumbaren Zusammensetzung, vorliegt.

**10.** Verfahren nach einem der Ansprüche 7 bis 9, wobei der Katalysator eine Mischung aus Phenolsulfonsäure und Methylsulfonsäure ist.

**11.** Verfahren nach einem der Ansprüche 1 bis 10, wobei das neutralisierende Füllmaterial Aluminiumhydroxid ist.

**12.** Verfahren nach einem der Ansprüche 1 bis 6, wobei die aufschäumbare Zusammensetzung zusätzlich ein oder mehrere oberflächenaktive Substanzen, Treibmittel und Härter enthält.

**13.** Verfahren nach Anspruch 12, wobei das Füllmaterial Gips, Calciumsulfatdihydrat, Glasmikrokugeln und/oder Flugasche enthält.

**14.** Verfahren nach Anspruch 13, wobei das Treibmittel Pentan oder Methylenchlorid ist.

**15.** Verfahren nach einem der Ansprüche 1 bis 14, wobei das Harz 30% bis 150%, bezogen auf das Gewicht des Harzes, an Füllmaterial enthält.

**16.** Verfahren nach einem der Ansprüche 1 bis 15, wobei die aufschäumbare Zusammensetzung bei einer Temperatur zwischen 25° C und 45° C in die Form gefüllt wird.

**17.** Verfahren nach einem der Ansprüche 1 bis 16, wobei die Temperatur der Formberfläche (1, 2) zu Beginn des Einfüllens der aufschäumbaren Zusammensetzung im Bereich zwischen 60° C und 85° C liegt.

**18.** Verfahren nach einem der Ansprüche 1 bis 17, wobei die Temperatur der Formoberfläche (1, 2) während des Aushärtens des Harzes 97° C nicht übersteigt.

## Revendications

**1.** Procédé de production d'un article moulé ayant une dimension en largeur supérieure à son épaisseur, comprenant les étapes consistant à :

(a) introduire, dans un moule ayant une surface chauffée (1, 2), une composition pouvant mousser et contenant une résine de phénol-formaldéhyde, un catalyseur acide et une charge, le moule ayant une cavité de moulage qui a une profondeur sensiblement égale à la largeur de l'article moulé résultant et une largeur sensiblement égale à l'épaisseur de l'article moulé résultant ;
(b) obliger la composition à se dilater de façon à ce qu'elle remplisse le moule et permettre à la résine de durcir dans le moule de façon telle que la température de la composition pendant le durcissement soit d'au moins 90°C ; et
(c) retirer du moule l'article moulé formé pendant l'étape (b) ;
caractérisé en ce que la charge comprend une charge neutralisante telle que le pH de la mousse durcie finale ne soit pas inférieur à 2 et que la température de la surface du moule (1, 2) au début de l'étape (a) soit comprise entre 60°C et 90°C.

**2.** Procédé selon la revendication 1, dans lequel la résine de phénol-formaldéhyde est une solution aqueuse alcaline de résol condensé ayant un rapport de phénol : formaldéhyde de 1:1,2 à 1:2,0 et une teneur en solides comprise entre 65 % et 85 % en poids.

3. Procédé selon la revendication 2, dans lequel le rapport de phénol : formaldéhyde du résol est compris entre I : 1,5 et 1 : 1,7.

4. Procédé selon la revendication 2 ou 3, dans lequel le résol est au stade A et a une viscosité inférieure à 120 poises à 25°C.

5. Procédé selon la revendication 3 ou 4, dans lequel le résol a une viscosité inférieure à 12 poises à 40°C.

6. Procédé selon l'une quelconque des revendications 1 à 5, dans lequel la résine de phénol-formaldéhyde est modifiée avec un glycol, un polyglycol, un éther de glycol ou un ester de glycol.

7. Procédé selon l'une quelconque des revendications I à 6, dans lequel le catalyseur est un acide sulfonique.

8. Procédé selon la revendication 7, dans lequel le catalyseur est un acide paratoluène-sulfonique, un acide xylène-sulfonique ou un acide phénol-sulfonique, éventuellement mélangé avec de l'acide sulfurique.

9. Procédé selon la revendication 7 ou 8, dans lequel l'acide sulfonique est présent en une quantité de 5 à 15 % en poids par rapport au poids de la composition pouvant mousser.

10. Procédé selon l'une quelconque des revendications 7 à 9, dans lequel le catalyseur est un mélange d'acide phénol-sulfonique et d'acide méthylsulfonique.

11. Procédé selon l'une quelconque des revendications 1 à 10, dans lequel la charge neutralisante est de l'hydroxyde d'aluminium.

12. Procédé selon l'une quelconque des revendications 1 à 6, dans lequel la composition pouvant mousser contient, en outre, un ou plusieurs des éléments suivants : agent tensio-actif, agent gonflant et agent de durcissement.

13. Procédé selon la revendication 12, dans lequel la charge contient un enduit en plâtre, du sulfate de calcium dihydraté, des microsphères de verre et/ou des cendres volantes.

14. Procédé selon la revendication 13, dans lequel l'agent gonflant est du pentane ou du chlorure de méthylène.

15. Procédé selon l'une quelconque des revendications 1 à 14, dans lequel la résine contient de 30 à 150 % de charge par rapport au poids de la résine.

16. Procédé selon l'une quelconque des revendications 1 à 15, dans lequel la composition pouvant mousser est introduite dans le moule à une température comprise entre 25 et 45°C.

17. Procédé selon l'une quelconque des revendications 1 à 16, dans lequel la température de la surface du moule (1, 2) au début de l'introduction de la composition pouvant mousser est comprise entre 60 et 85°C.

18. Procédé selon l'une quelconque des revendications 1 à 17, dans lequel la température de la surface du moule (1, 2) pendant le durcissement de la résine ne dépasse pas 97°C.

FIG. 1

FIG. 2